# FASCICULE DE BREVET EUROPEEN

(11) **EP 3 130 056 B1**
(45) Date de publication et mention de la délivrance du brevet: **12.08.2020**
(21) Numéro de dépôt: 15712913.1
(22) Date de dépôt: 30.03.2015
(51) Int. Cl.: H02K 11/33, H02K 1/20, H02K 1/27, H02K 7/14, H02K 9/00, H02K 1/14, H02K 1/18

(54) **MOTEUR ÉLECTRIQUE, DISPOSITIF DE PULSION D'AIR ET SYSTÈME DE VENTILATION DE CHAUFFAGE ET/OU DE CLIMATISATION ÉQUIPÉS D'UN TEL MOTEUR**
ELEKTROMOTOR, VORRICHTUNG ZUR LUFTBEWEGUNG UND BELÜFTUNGSSYSTEM ZUR HEIZUNG UND/ODER KLIMATISIERUNG EINES SOLCHEN MOTORS
ELECTRIC MOTOR, DEVICE OF AIR VENTILATION AND VENTILATION SYSTEM OF HEATING AND/OR AIR CONDITIONING OF SUCH MOTOR

(30) Priorité: 11.04.2014 FR 1453248
(43) Date de publication de la demande: 15.02.2017
(73) Titulaire: Valeo Systemes Thermiques, 78320 Le Mesnil Saint Denis (FR)
(72) Inventeur: LE GOFF, Morgan, F-91360 Epinay sur Orge (FR); CAPOULUN, Geoffroy, F-77190 Dammarie-les-Lys (FR)
(74) Mandataire: Tran, Chi-Hai
(86) Numéro de dépôt international: PCT/EP2015/056854
(87) Numéro de publication internationale: WO 2015/155043

(56) Documents cités:
- WO-A2-2011/133024
- US-A1- 2002 024 264
- US-A1- 2012 299 407

## Description

La présente invention se rapporte au domaine des moteurs électriques. La présente invention concerne plus particulièrement, mais non exclusivement, un moteur électrique utilisé dans un dispositif de pulsion d'air. Un dispositif de pulsion d'air équipé d'un moteur électrique selon l'invention est, par exemple, utilisé dans un système de ventilation, de chauffage et/ou de climatisation d'un véhicule automobile.

Un moteur électrique est généralement fondé sur l'interaction d'un rotor avec un stator, ledit rotor et ledit stator étant montés indépendamment l'un de l'autre dans ledit moteur. Il en résulte qu'un tel moteur présente l'inconvénient de ne pas garantir une bonne coaxialité entre le rotor et le stator. Or, une mauvaise coaxialité entre ces deux éléments peut entraîner des risques de dysfonctionnement du moteur tels qu'une alternance de phases d'accélération et de phases de ralentissement.

La demande de brevet US2012299407 décrit un moteur électrique pour dispositif de pulsion d'air avec un élément de support du rotor et du stator, et le radiateur constituant une même pièce bi-fonctionnelle monobloc.

Ainsi, un moteur électrique selon l'invention permet d'assurer un fonctionnement homogène et régulier du moteur électrique, et d'éviter ainsi une vitesse de rotation par à-coups du rotor autour du stator.

La présente invention a ainsi pour objet un moteur électrique comportant un stator et un rotor, le rotor étant disposé autour du stator, un élément de support dudit rotor et dudit stator, un support de moteur électrique traversé par un flux d'air, un radiateur et un organe électronique apte à piloter ledit moteur électrique, ledit radiateur étant inséré entre ledit support de moteur électrique et ledit organe électronique, l'élément de support du rotor et du stator, et le radiateur constituent une même pièce, dite "bi-fonctionnelle", la pièce bi-fonctionnelle étant monobloc, caractérisé en ce que le support de moteur électrique comportant un canal latéral d'entrée d'air et au moins un passage orienté vers le stator et le rotor de moteur électrique pour permettre au flux d'air traversant ledit support de moteur électrique de transiter vers ledit stator et ledit rotor de moteur électrique pour le refroidir.

Le terme « bi-fonctionnel » signifie que la pièce remplit au moins une première fonction de support pour le rotor et le stator, et au moins une deuxième fonction de refroidissement de l'organe électronique.

Ainsi, ladite pièce bi-fonctionnelle est monobloc. Le fait que ladite pièce bi-fonctionnelle soit d'une seule pièce (ou monobloc) permet de s'affranchir du fait d'avoir à positionner un radiateur par rapport à un élément de support.

Ainsi, lorsque ladite pièce bi-fonctionnelle est positionnée entre l'organe électronique et le support de moteur, le radiateur va contribuer automatiquement au bon positionnement de l'élément de support du rotor et du stator et donc à un montage parfaitement coaxial dudit rotor et dudit stator. Le fait que la position relative entre le radiateur et l'élément de support est figée est avantageux, car cela permet de ne pas avoir, au niveau du moteur, à positionner un radiateur par rapport à un élément de support. Bien que constituant une même pièce, le radiateur et l'élément de support peuvent être réalisés dans le même matériau ou dans des matériaux différents.

Généralement, l'organe électronique apte à piloter le moteur électrique est une carte électronique qui pilote le fonctionnement du moteur électrique.

Avantageusement, la pièce bi-fonctionnelle comprend :
- une embase faisant office de radiateur,
- une partie creuse, par exemple cylindrique, qui est dotée d'un canal interne, par exemple cylindrique, et qui fait office d'élément de support du rotor et du stator.

De cette manière, le radiateur peut assurer un refroidissement efficace sur une surface étendue, tout en occupant un espace restreint grâce à sa faible épaisseur.

De façon avantageuse, l'embase présente une forme discoïdale et s'étend dans un plan qui est perpendiculaire à l'axe de révolution du canal interne de la partie creuse.

De façon préférentielle, la pièce bi-fonctionnelle est en métal. Ainsi, l'embase faisant office de radiateur pourra refroidir efficacement l'organe électronique par conduction thermique. De plus, le fait que la pièce bi-fonctionnelle soit réalisée en métal permet de bloquer des rayonnements électromagnétiques émis par l'organe électronique, ces rayonnements électromagnétiques pouvant perturber le fonctionnement du moteur électrique.

En outre, le fait que la pièce bi-fonctionnelle soit réalisée en métal permet de relier aisément le stator à la masse par l'intermédiaire de ladite pièce bi-fonctionnelle.

Préférentiellement, la pièce bi-fonctionnelle est en aluminium. De cette manière, la pièce fonctionnelle est, d'une part, légère et, d'autre part, un bon conducteur thermique.

De façon avantageuse, l'embase de la pièce bi-fonctionnelle est placée au contact du support de moteur et de l'organe électronique, de manière à ce que le flux de fluide traversant le support de moteur refroidisse le radiateur et que ledit radiateur refroidisse ledit organe électronique. Le radiateur a pour fonction d'absorber la chaleur émise par l'organe électronique pour ensuite évacuer cette chaleur par l'intermédiaire du fluide provenant du flux de fluide traversant le support de moteur.

Plus particulièrement, le stator est disposé autour de la partie creuse en étant au contact de la surface externe de ladite partie, le canal interne étant apte à recevoir un axe central du rotor. Ainsi, pour ce positionnement, le rotor tourne autour du stator.

De façon préférentielle, le support de moteur comporte au moins un passage vers le moteur pour permettre au flux de fluide traversant ledit support de transiter vers ledit moteur pour le refroidir. Ainsi, le flux de fluide traversant le support de moteur sert à la fois à refroidir le radiateur et les zones chaudes du moteur situées sur le rotor et sur le stator.

Selon une autre caractéristique possible, le flux de fluide traversant ledit support de moteur est au moins l'un des fluides suivants : de l'air, de l'eau, un fluide réfrigérant (par exemple du R134A, du HFO 1234 YF, du dioxyde de carbone, etc.)...

L'invention a pour deuxième objet une pièce bi-fonctionnelle apte à assurer les fonctions de radiateur et de support de rotor et de stator dans un moteur conforme à l'invention tel que décrit précédemment.

L'invention a pour troisième objet un dispositif de pulsion d'air comprenant au moins un moteur électrique conforme à l'invention tel que décrit précédemment.

Selon une caractéristique possible, le dispositif de pulsion d'air selon l'invention comprend au moins une roue de ventilation coopérant avec ledit au moins un moteur électrique.

Un dispositif de pulsion d'air selon l'invention présente l'avantage de pouvoir être fabriqué plus rapidement et plus simplement, en raison du fait que le radiateur et l'élément de support du rotor et du stator constituent une même pièce. En effet, une telle pièce est fabriquée en une seule opération, alors que deux pièces distinctes nécessitent deux processus de fabrication. Un tel dispositif a de plus l'avantage de pouvoir être monté plus facilement, en effet le positionnement précis d'une seule pièce dans ledit dispositif est toujours plus aisé à réaliser que celui de deux pièces séparées. Il présente enfin l'avantage d'être d'un fonctionnement plus homogène et plus fiable, en assurant une coaxialité plus rigoureuse et plus précise entre le rotor et le stator du moteur électrique.

L'invention a pour quatrième objet un système de chauffage, de ventilation et/ou de climatisation comprenant au moins un dispositif de pulsion d'air conforme à l'invention tel que décrit précédemment.

L'invention sera mieux comprise, et d'autres buts, détails, caractéristiques et avantages de celle-ci apparaîtront plus clairement au cours de la description suivante d'un mode de réalisation particulier de l'invention, donnée uniquement à titre illustratif et non limitatif, en référence aux dessins annexés, sur lesquels :
- la figure 1 représente une vue en coupe schématique d'un dispositif de pulsion d'air équipé d'un moteur électrique selon l'invention ;
- la figure 2 est une vue en perspective d'un moteur électrique et d'une pièce bi-fonctionnelle du dispositif de pulsion d'air de la figure 1 ;
- la figure 3 est une vue en perspective et en éclaté d'un dispositif de pulsion d'air de la figure 1 ;
- la figure 4 est une vue en perspective d'une pièce bi-fonctionnelle selon un mode de réalisation possible de l'invention.

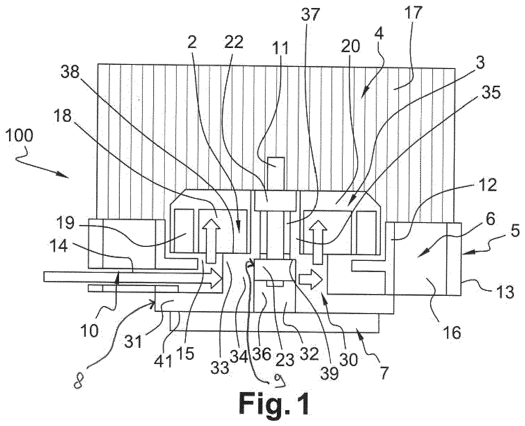

La figure 1 est une vue schématique en coupe d'un dispositif 100 de pulsion d'air équipé d'un moteur électrique 101 selon l'invention. Le moteur électrique 101 comprend un stator 2 et un rotor 3, un support 5 de moteur, un organe électronique 7 apte à piloter ledit moteur, un radiateur 8, un élément de support 9 dudit rotor 3 et dudit stator 2. Le moteur électrique 101 comprend au moins un canal de circulation d'un flux de fluide 10, par exemple un flux d'air, permettant le refroidissement dudit moteur 101. Ainsi, dans le mode de réalisation présenté ledit moteur électrique 101 est traversé par un flux d'air.

On notera cependant que le fluide assurant le refroidissement du moteur électrique 101 peut être un gaz, un liquide ou mélange diphasique gaz-liquide. Le fluide est par exemple de l'eau, un fluide réfrigérant (tel que du R134A, du HFO 1234 YF, du dioxyde de carbone, etc.)...

Le dispositif 100 de pulsion d'air comprend au moins un moteur électrique 101 et au moins une roue 4 de ventilation qui coopère avec ledit au moins un moteur électrique 101.

Le radiateur 8 et l'élément de support 9 du rotor 3 et du stator 2 du moteur électrique 101 forment une seule pièce 30 dite « bi-fonctionnelle », car elle remplit au moins deux fonctions, à savoir au moins une première fonction de support pour le rotor 3 et le stator 2, et au moins une deuxième fonction de refroidissement de l'organe électronique 7.

Cependant, la pièce 30 dite bi-fonctionnelle est apte à remplir d'autres fonctions qui apparaîtront, ci-après, dans l'exemple de réalisation non-limitatif présenté.

On notera que cette pièce 30 est préférentiellement réalisée en métal, et plus particulièrement en aluminium qui est un matériau léger et bon conducteur thermique.

La pièce bi-fonctionnelle comprend ainsi :
- une embase 31 faisant office de radiateur 8,
- une partie, par exemple cylindrique, creuse 33 qui fait office d'élément de support 9 du rotor 3 et du stator 2.

De plus, l'embase 31 est dotée d'une ouverture centrale 32.

On notera, par ailleurs, que l'embase 31 est de préférence de faible épaisseur, c'est-à-dire que l'embase 31 présente une épaisseur comprise entre 2 et 15 mm.

Dans le mode de réalisation présentée, l'embase 31 présente une forme circulaire, mais celle-ci peut prendre une forme rectangulaire, carrée, elliptique, triangulaire. La forme de l'embase 31 de la pièce 30 bi-fonctionnelle est fonction de la forme des éléments contigus à ladite embase 31.

Préférentiellement, le rotor 3 est disposé autour du stator 2, la rotation dudit rotor 3 autour dudit stator 2 entrainant la rotation d'un axe 11 de transmission pour provoquer la mise en mouvement de la roue 4 de ventilation solidarisée audit axe 11.

La roue 4 du dispositif 100 de pulsion d'air comprend, disposées à sa périphérie, une pluralité d'ailettes inclinées 17 de manière à ce que la rotation de ladite roue 4 sous l'effet du moteur électrique 101, contribue à produire de l'air pulsé par l'intermédiaire desdites ailettes 17.

Le support 5 de moteur est, dans le mode de réalisation présentée, une pièce de forme circulaire, mais ledit support peut adopter d'autres formes telles qu'une forme rectangulaire, triangulaire, elliptique.

Selon l'exemple particulier de réalisation illustré en figure 1, le support 5 de moteur comprend une gorge 6 périphérique et des éléments 16 de découplage.

En outre, le support 5 de moteur comprend une bague intérieure 12 et une bague extérieure 13 ménageant entre elles un espace annulaire constituant la gorge périphérique 6. Le support 5 comprend également ledit au moins un canal de circulation d'un flux d'air 10. Selon la présente invention, ce dernier comprend un canal latéral 14 d'entrée d'air et au moins un passage 15 orienté vers le moteur électrique 101, pour permettre à l'air en provenance dudit canal 14 de transiter vers ledit moteur 101 afin de le refroidir.

Les éléments de découplage 16 forment une zone souple située dans la gorge 6 délimitée par les deux bagues 12, 13. Ladite zone souple a pour fonction d'amortir les vibrations du moteur électrique afin qu'elles ne se propagent pas dans le véhicule automobile, et plus particulièrement dans une planche de bord dudit véhicule.

Cette zone peut indifféremment être formée par une mousse d'amortissement ou par des entretoises 16 en plastique souple prenant appui contre les deux bagues 12, 13.

Généralement, l'organe électronique 7 apte à piloter ledit moteur 101 est une carte électronique qui pilote le fonctionnement du moteur électrique 101, c'est-à-dire qu'elle pilote par exemple la vitesse dudit moteur 101.

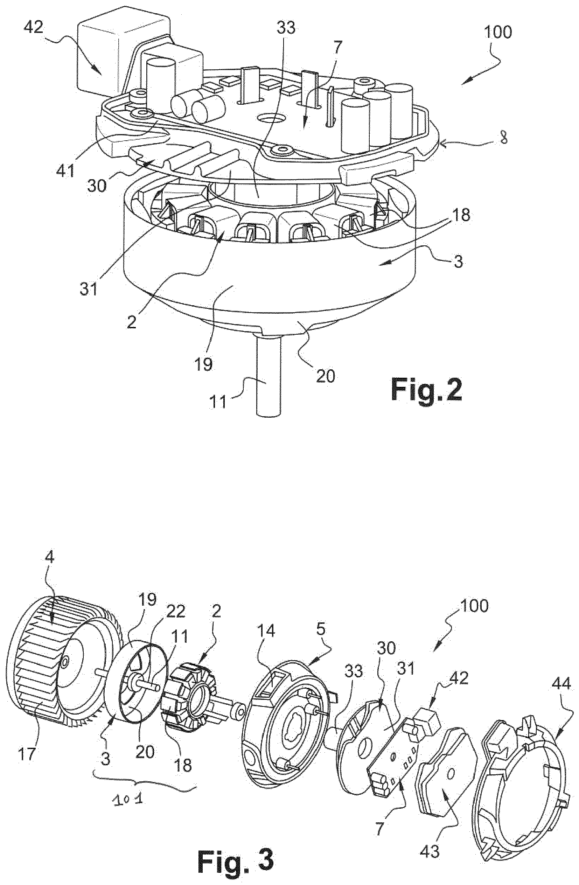

Le stator 2, quant à lui, est une pièce annulaire, formée de plusieurs bobinages 18. Le rotor 3 est assimilable à un couvercle comprenant un corps cylindrique creux 19 et une paroi 20, par exemple bombée, qui obture ledit corps 19 à l'une de ses deux extrémités. Comme plus particulièrement visible à la figure 2, le stator 2 est, en position montée, disposé dans le corps cylindrique creux 19 du stator 3. Le rotor 3 présente également un axe qui traverse la paroi 20 en son centre et qui correspond à un axe 11 de transmission. Une partie dudit axe 11 s'étend à l'intérieur du corps cylindrique 19 en étant confondu avec l'axe de révolution dudit corps cylindrique 19, et une autre partie dudit axe 11 s'étend vers l'extérieur dudit rotor 3 et sert de support à la roue 4 de ventilation.

De plus, le rotor 3 est monté dans la partie de la pièce 30 faisant office d'élément de support 9, c'est-à-dire dans la partie creuse 33, de manière à ce que la partie de son axe 11 qui s'étend à l'intérieur de son corps 19 creux, vienne occuper le canal interne dudit élément 9 de support, et de manière à ce que sa paroi 20 et ledit corps 19 viennent coiffer, tel un couvercle, le stator 2.

Deux roulements 22, 23, présentant une forme de cylindre creux, sont insérés dans le canal interne de l'élément de support 9, autour de l'axe 11 du rotor 3, pour favoriser la rotation dudit rotor 3 dans ledit élément de support 9. On notera que lesdits roulements 22 et 23 peuvent être des roulements à billes, des roulements à rouleaux, des roulements à aiguilles, etc.

La roue de ventilation 4 prolonge donc le rotor 3 en étant montée de façon coaxiale avec ledit rotor 3 sur l'axe 11 de celui-ci.

Selon un exemple de réalisation illustré à la figure 5, l'embase 31 de la pièce 30 bi-fonctionnelle présente des reliefs destinés à coopérer avec des reliefs complémentaires de pièces adjacentes du moteur 101. La coopération des reliefs des pièces adjacentes au moteur 101 avec les reliefs de l'embase 31 permet de faciliter le positionnement de la pièce 30 bi-fonctionnelle au sein dudit moteur 101. En effet, ces reliefs complémentaires font office de détrompeur.

De plus, l'embase 31 comprend un certain nombre d'orifices aptes à recevoir chacun une vis pour permettre la fixation de la pièce 30 bi-fonctionnelle dans le moteur électrique 101 ou pour permettre la fixation d'autres éléments sur ladite pièce bi-fonctionnelle 30.

L'embase 31 est prolongée par au moins une partie creuse 33. Ladite partie creuse 33 est, par exemple, de forme cylindrique.

Dans le mode de réalisation présenté, la partie creuse 33 comprend un premier tronçon 34, prolongé par un deuxième tronçon 35.

Dans le mode de réalisation présenté, les premier et deuxième tronçons 34 sont de forme cylindrique, cependant, la partie creuse 33 peut être composée d'un ou plusieurs tronçons de formes et/ou de diamètres différents.

Le premier tronçon 34 est situé entre l'embase 31 et le deuxième tronçon 35, le diamètre extérieur de ladite embase 31 étant supérieur au diamètre extérieur dudit premier tronçon 34, qui est lui-même supérieur au diamètre extérieur dudit deuxième tronçon 35.

Le premier tronçon 34 et le deuxième tronçon 35 comprennent chacun un canal cylindrique interne 36 et 37 en continuité l'un de l'autre, le diamètre du canal interne 36 du premier tronçon 34 étant supérieur au diamètre du canal interne 37 du deuxième tronçon 35 (le canal interne 36 et la disposition des deux canaux 36 et 37 sont plus particulièrement visibles à la figure 1).

Il est à noter que le diamètre du canal interne 36 du premier tronçon 34 est égal au diamètre de l'ouverture 32 centrale de l'embase 31.

Le canal interne 37 du deuxième tronçon 35 se termine par une partie cylindrique évasée, dont le diamètre est égal au diamètre du canal interne 36 du premier tronçon 34. Les deux canaux internes 36, 37 sont coaxiaux.

Le premier 34 et le deuxième 35 tronçons définissent entre eux un épaulement 38 externe. De même, les canaux internes 36, 37 des deux tronçons 34, 35 définissent entre eux un épaulement interne 39 (plus particulièrement visible à la figure 1). L'embase 31 présente une forme discoïdale et s'étend dans un plan qui est perpendiculaire à l'axe de révolution de la partie creuse 33 cylindrique (ou encore perpendiculaire à l'axe de révolution des canaux internes 36, 37), prolongeant ladite embase 31.

Comme illustré aux figures 2 et 3, le stator 2 est enfilé autour du deuxième tronçon 35, et vient en butée contre l'épaulement externe 39. L'axe 11 du rotor 3 occupe le canal interne 37 du deuxième tronçon 35, la partie évasée ainsi qu'une portion du canal interne 36 du premier tronçon 34. Les deux roulements 22, 23 sont enfilés autour de l'axe 11 du rotor 2, respectivement dans la partie évasée du canal interne 37 du deuxième tronçon 35, et dans le canal interne 36 du premier tronçon 34 en venant en appui contre l'épaulement interne 39.

En se référant à la figure 3, la carte électronique 7 ainsi qu'un connecteur électrique 42, relié à ladite carte 7, sont plaqués contre une face 41 de l'embase 31, qui est opposée à celle qui est prolongée par la partie creuse 33.

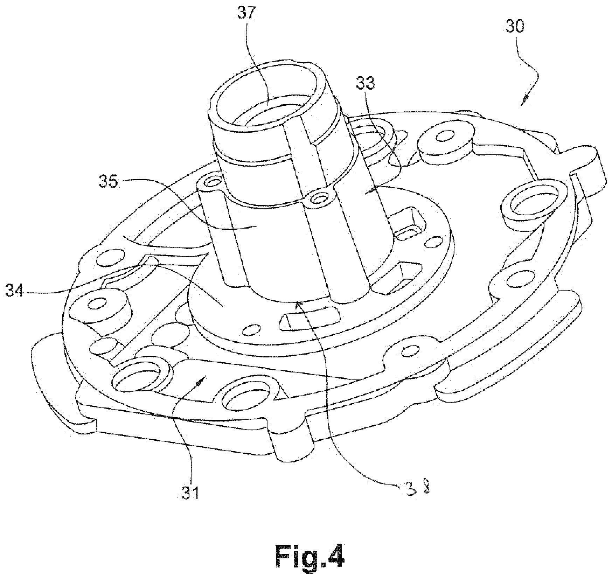

En se référant à la figure 4, la pièce 30 bi-fonctionnelle rassemblant le radiateur et le support de rotor 3 et de stator 2 permet un positionnement rigoureux et précis dudit support, par l'intermédiaire du radiateur qui vient s'empiler de façon naturelle sur les autres éléments du moteur électrique 101.

Ainsi, lorsque le radiateur est supposé être bien positionné dans le moteur électrique 101, il en découle que l'élément de support 9 du rotor 3 et du stator 2 est également bien positionné. Comme illustré à la figure 3, le moteur électrique 101 selon l'invention comprend également un capot 43 de protection de la carte électronique 7 ainsi qu'une bague d'adaptation 44 entourant ledit capot 43.

On note que si le capot 43 est réalisé dans un matériau métallique, ou que celui-ci est métallisé, alors il est possible de relier ledit capot 43 à la masse par l'intermédiaire de la pièce 30.

Ainsi, lorsque le moteur électrique 101 est activé, le rotor 3 est mis en rotation autour du stator 2, entrainant la rotation simultanée de la roue 4 de ventilation, qui produit alors de l'air pulsé. De plus, de l'air extérieur au dispositif 100 pénètre dans le canal latéral 14 du support 5 de moteur afin, d'une part, de refroidir le radiateur 8 et donc de maintenir la carte électronique 7 à une température relativement basse, c'est-à-dire à une température inférieure ou égale à 90 °C, et d'autre part, de refroidir les zones chaudes du moteur 101 situées sur le rotor 3 et sur le stator 2.

On notera que le dispositif 100 de pulsion d'air décrit précédemment peut être avantageusement utilisé dans un système de chauffage, de ventilation et/ou de climatisation (non représenté). Le dispositif 100 de pulsion d'air est, par exemple, disposé à proximité d'une entrée d'air du système de chauffage, de ventilation et/ou de climatisation afin de permettre une circulation d'air provenant de l'extérieur dans ledit système.

## Revendications

1. Moteur électrique (101) pour dispositif (100) de pulsion d'air utilisé dans un système de ventilation, de chauffage et/ou de climatisation d'un véhicule automobile, le moteur électrique (101) comportant un stator (2) et un rotor (3), le rotor (3) étant disposé autour du stator (2), un élément de support (9) dudit rotor (3) et dudit stator (2), un support (5) de moteur électrique (101) traversé par un flux d'air, un radiateur (8) et un organe électronique (7) apte à piloter ledit moteur électrique (101) ledit radiateur (8) étant inséré entre ledit support (5) de moteur électrique (101) et ledit organe électronique (7), l'élément de support (9) du rotor (3) et du stator (2), et le radiateur (8) constituant une même pièce (30) dite bi-fonctionnelle, la pièce bi-fonctionnelle étant monobloc, **caractérisé en ce que** le support (5) de moteur électrique (101) comportant un canal latéral (14) d'entrée d'air et au moins un passage (15) orienté vers le le stator (2) et le rotor (3) de moteur électrique (101) pour permettre au flux d'air traversant ledit support (5) de moteur électrique (101) de transiter vers ledit stator (2) et ledit rotor (3) de moteur électrique (101) pour le refroidir.

2. Moteur électrique (101) selon la revendication 1, **caractérisé en ce que** la pièce bi-fonctionnelle (30) comprend :
- une embase (31) faisant office de radiateur,
- une partie creuse (33) qui est dotée d'un canal interne (36, 37) qui fait office d'élément de support du rotor (3) et du stator (2).

3. Moteur électrique (101) selon la revendication 2, **caractérisé en ce que** l'embase (31) de la pièce bi-fonctionnelle (30) est placée au contact du support (5) de moteur électrique (101) et de l'organe électronique (7), de manière à ce que le flux d'air traversant le support (5) de moteur électrique (101) refroidisse le radiateur (31) et que ledit radiateur (31) refroidisse ledit organe électronique (7).

4. Moteur électrique (101) selon la revendication 2 ou 3, **caractérisé en ce que** l'embase (31) présente une forme discoïdale et s'étend dans un plan qui est perpendiculaire à l'axe de révolution du canal interne (36, 37) de la partie creuse (33).

5. Moteur électrique (101) selon l'une quelconque des revendications 2 à 4, **caractérisé en ce que** le stator (2) est disposé autour de la partie creuse (33) en étant au contact de la surface externe de ladite partie creuse (33), et **en ce que** le canal interne (36, 37) est apte à recevoir un axe central (11) du rotor (3), ledit rotor (3) étant positionné autour dudit stator (2).

6. Moteur électrique (101) selon l'une quelconque des revendications 1 à 5, **caractérisé en ce que** la pièce bi-fonctionnelle (30) est en métal.

7. Moteur électrique (101) selon la revendication 6, **caractérisé en ce que** la pièce bi-fonctionnelle (30) est en aluminium.

8. Pièce bi-fonctionnelle (30) pour la réalisation d'un moteur électrique (101), laquelle est conforme à la pièce bi-fonctionnelle (30) telle que définie dans le moteur électrique (101) selon l'une quelconque des revendications 1 à 7.

9. Dispositif (100) de pulsion d'air **caractérisé en ce qu'**il comprend au moins un moteur électrique (101) conforme à l'une quelconque des revendications 1 à 7.

10. Dispositif (100) selon la revendication 9 **caractérisé en ce qu'**il comprend au moins une roue de ventilation (4) coopérant avec ledit au moins un moteur électrique (101).

11. Système de chauffage, de ventilation et/ou de climatisation comprenant au moins un dispositif (100) de pulsion d'air selon la revendication 9 ou 10.

## Patentansprüche

1. Elektromotor (101) für eine Luftbewegungsvorrichtung (100), die in einem Belüftungs-, Heizungs- und/oder Klimatisierungssystem eines Kraftfahrzeugs verwendet wird, wobei der Elektromotor (101) Folgendes aufweist: einen Stator (2) und einen Rotor (3), wobei der Rotor (3) um den Stator (2) herum angeordnet ist, ein Tragelement (9) des Rotors (3) und des Stators (2), einen Träger (5) für den Elektromotor (101), der von einem Luftstrom durchströmt wird, einen Radiator (8) und ein elektronisches Organ (7), das dazu in der Lage ist, den Elektromotor (101) zu steuern, wobei der Radiator (8) zwischen den Träger (5) des Elektromotors (101) und das elektronische Organ (7) eingefügt ist, wobei das Tragelement (9) des Rotors (3) und des Stators (2) und der Radiator (8) ein einziges, sogenanntes bifunktionales Teil (30) ausbilden, wobei das bifunktionale Teil einstückig ist,
**dadurch gekennzeichnet, dass** der Träger (5) des Elektromotors (101) einen seitlichen Lufteinlasskanal (14) und zumindest einen zum Stator (2) und zum Rotor (3) des Elektromotors (101) hin ausgerichteten Durchlass (15) aufweist, um zu ermöglichen, dass der Luftstrom, der den Träger (5) des Elektromotors (101) durchströmt, zum Stator (2) und zum Rotor (3) des Elektromotors (101) gelangt, um diesen zu kühlen.

2. Elektromotor (101) nach Anspruch 1, **dadurch gekennzeichnet, dass** das bifunktionale Teil (30) Folgendes umfasst:
- eine Grundplatte (31), die als Radiator dient,
- ein hohles Teil (33), das mit einem inneren Kanal (36, 37) versehen ist, der als Tragelement des Rotors (3) und des Stators (2) dient.

3. Elektromotor (101) nach Anspruch 2, **dadurch gekennzeichnet, dass** die Grundplatte (31) des bifunktionalen Teils (30) in Kontakt mit dem Träger (5) des Elektromotors (101) und dem elektronischen Organ (7) angeordnet ist, so dass der den Träger (5) des Elektromotors (101) durchströmende Luftstrom den Radiator (31) kühlt und dass der Radiator (31) das elektronische Organ (7) kühlt.

4. Elektromotor (101) nach Anspruch 2 oder 3, **dadurch gekennzeichnet, dass** die Grundplatte (31) eine Scheibenform aufweist und sich in einer Ebene erstreckt, die zur Drehachse des inneren Kanals (36, 37) des hohlen Teils (33) senkrecht ist.

5. Elektromotor (101) nach einem der Ansprüche 2 bis 4, **dadurch gekennzeichnet, dass** der Stator (2) um den hohlen Teil (33) herum angeordnet ist und mit der Außenfläche des hohlen Teils (33) in Kontakt steht und dass der innere Kanal (36, 37) eine Mittelachse (11) des Rotors (3) aufnehmen kann, wobei der Rotor (3) um den Stator (2) herum angeordnet ist.

6. Elektromotor (101) nach einem der Ansprüche 1 bis 5, **dadurch gekennzeichnet, dass** das bifunktionale Teil (30) aus Metall ist.

7. Elektromotor (101) nach Anspruch 6, **dadurch gekennzeichnet, dass** das bifunktionale Teil (30) aus Aluminium ist.

8. Bifunktionales Teil (30) zur Herstellung eines Elektromotors (101), das dem bifunktionalen Teil (30), wie es in dem Elektromotor (101) nach einem der Ansprüche 1 bis 7 definiert ist, entspricht.

9. Luftbewegungsvorrichtung (100), **dadurch gekennzeichnet, dass** sie zumindest einen Elektromotor (101) nach einem der Ansprüche 1 bis 7 umfasst.

10. Vorrichtung (100) nach Anspruch 9, **dadurch gekennzeichnet, dass** sie zumindest ein Lüftungsrad (4) umfasst, das mit dem zumindest einen Elektromotor (101) zusammenwirkt.

11. Heizungs-, Belüftungs- und/oder Klimatisierungssystem, umfassend zumindest eine Luftbewegungsvorrichtung (100) nach Anspruch 9 oder 10.

## Claims

1. Electric motor (101) for an air pulse device (100) used in a ventilation, heating and/or air-conditioning system of a motor vehicle, the electric motor (101) comprising a stator (2) and a rotor (3), the rotor (3) being arranged around the stator (2), a support element (9) for said rotor (3) and for said stator (2), a support (5) for the electric motor (101) through which passes a flow of air, a radiator (8) and an electronic member (7) that is able to control said electric motor (101), said radiator (8) being inserted between said support (5) for the electric motor (101) and said electronic member (7), the support element (9) for the rotor (3) and for the stator (2), and the radiator (8) constituting a single part (30), referred to as dual-function, the dual-function part being in one piece,
**characterized in that** the support (5) for the electric motor (101) comprising a lateral air inlet duct (14) and at least one passage (15) that is oriented towards the stator (2) and the rotor (3) of the electric motor (101) to allow the flow of air passing through said support (5) for the electric motor (101) to pass through towards said stator (2) and said rotor (3) of the electric motor (101) in order to cool it.

2. Electric motor (101) according to Claim 1, **characterized in that** the dual-function part (30) comprises:
- a base (31) that serves as a radiator,
- a hollow portion (33) that is provided with an internal duct (36, 37) which serves as a support element for the rotor (3) and for the stator (2).

3. Electric motor (101) according to Claim 2, **characterized in that** the base (31) of the dual-function part (30) is placed in contact with the support (5) for the electric motor (101) and with the electronic member (7) such that the flow of air passing through the support (5) for the electric motor (101) cools the radiator (31), and such that said radiator (31) cools said electronic member (7).

4. Electric motor (101) according to Claim 2 or 3, **characterized in that** the base (31) is roughly discshaped and extends in a plane that is perpendicular to the axis of revolution of the internal duct (36, 37) of the hollow portion (33).

5. Electric motor (101) according to any one of Claims 2 to 4, **characterized in that** the stator (2) is arranged around the hollow portion (33), being in contact with the external surface of said hollow portion (33), and **in that** the internal duct (36, 37) is able to receive a central spindle (11) of the rotor (3), said rotor (3) being positioned around said stator (2) .

6. Electric motor (101) according to any one of Claims 1 to 5, **characterized in that** the dual-function part (30) is made of metal.

7. Electric motor (101) according to Claim 6, **characterized in that** the dual-function part (30) is made of aluminium.

8. Dual-function part (30) for creating an electric motor (101), which part conforms to the dual-function part (30) as defined in the electric motor (101) according to any one of Claims 1 to 7.

9. Air pulse device (100), **characterized in that** it comprises at least one electric motor (101) conforming to any one of Claims 1 to 7.

10. Device (100) according to Claim 9, **characterized in that** it comprises at least one ventilation wheel (4) that cooperates with said at least one electric motor (101) .

11. Heating, ventilation and/or air-conditioning system comprising at least one air pulse device (100) according to Claim 9 or 10.
